# EUROPEAN PATENT APPLICATION

(11) **EP 1 746 358 A2**
(43) Date of publication of application: **24.01.2007**
(21) Application number: 06014977.0
(22) Date of filing: 19.07.2006
(51) Int. Cl.: F24F 12/00

(54) **Temperature regulating installation**

(30) Priority: 19.07.2005 NL 1029557
(71) Applicant: HOLDING OTTEN B.V., 6114 JN Susteren (NL)
(72) Inventor: Nicolaus Arnold Otten, D-52538 Selfkant (DE)
(74) Representative: Bleukx, Lucas Lodewijk M.

(57) **Abstract**

An installation for regulating at least the temperature in a plurality of occupied zones in a building by means of conditioned air, comprising a supply system for outside air, a discharge system for returning air to the outside atmosphere, a primary heat exchanger between on the one hand the supplied air and on the other the discharged air, a distribution box connected on the one hand to the heat exchanger for the supplied air and on the other to a plurality of pipes which open into the different occupied zones, and a collector which is on the one hand connected to the primary heat exchanger for the air to be discharged and on the other to a plurality of pipes which open into the different occupied zones, characterised in that a regulating device is fitted between the primary heat exchanger and the distribution box for heating and cooling the supplied air respectively.

## Description

The invention relates to an installation for regulating at least the temperature in a number of occupied zones in a building by means of conditioned air, comprising an outside air supply system, a discharge system for returning air to the outside, a primary heat exchanger between the supplied air on the one hand and the discharged air on the other, a distribution box connected on the one hand to the heat exchanger for the supplied air and on the other to a plurality of pipes which open into the different occupied zones, and a collector which is connected on the one hand to the primary heat exchanger for the air to be discharged and a plurality of pipes which open into the different occupied zones.

Such an installation is disclosed in WO-A-0075574.

Here an installation is described in which the air for each occupied zone is supplied and conditioned.

The disadvantage of such an installation is that it must have a relatively large capacity to ensure optimum conditioning of the occupied zone under all circumstances.

The Dutch patent 1 007 309 also discloses an installation for conditioning occupied zones.

Here use is made of a central heat exchanger in which the heat derived from the outgoing air is transferred to the incoming air, whereupon the latter is distributed to the different occupied zones.

The disadvantage of this is that the temperature in all the occupied zones is regulated at one and the same level and account is taken of the specific requirements imposed by the nature of the occupied zone or its residents.

The object of the invention is to provide an installation of the type mentioned in the introduction, wherein the problems associated with the state of the art are avoided.

This object is achieved according to the invention in that a regulating device is installed between the primary heat exchanger and the distribution box for heating and cooling the supplied air respectively.

This ensures that the primary regulation can be accurately dimensioned to regulate the mean value with a minimum quantity of energy, whist the installation for each occupied zone can be provided with very small dimensions yet has sufficient capacity for fine temperature regulation.

Other characteristics and advantages will become clear from the following descriptions, in which reference is made to the attached drawings, where:
- Fig. 1:: shows a diagrammatic representation of a first embodiment of an installation according to the invention, and
- Fig. 2:: shows a diagrammatic representation of a second embodiment of an installation according to the invention.

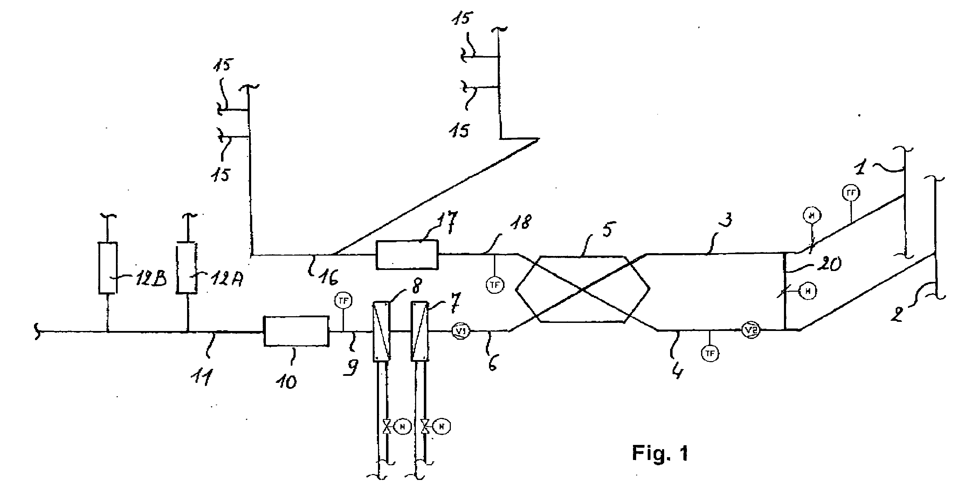

The installation according to the invention, as shown in Fig. 1, comprises two ducts 1 and 2, which directly communicate with the ambient air,

A duct 3 for the supply of ambient air to the occupied zones is connected on the one hand to duct 1 and on the other to the inlet of a first side of a heat exchanger 5.

A duct 4 for discharging the air derived from the occupied zones is connected on the one hand to duct 2 and on the other to the outlet of a second side of heat exchanger 5.

Heat exchanger 5 is, for example, an aluminium air-air heat exchanger operating on the counter-flow principle, with a thermal efficiency of approx 95%.

The outlet of the first side of heat exchanger 5 is connected via a duct 6 to a first and a second regulating device 7, 8, with which the supplied air can additionally be heated and cooled respectively. Regulating devices 7, 8 are in principle heat exchangers for the supplied air. They may be designed as genuine heat exchangers in which heat is exchanged with water, another gas mixture or a liquid mixture. On the other hand, they may also make use of electrical energy to heat or cool the supplied air.

After regulating device 8, the air is fed via a duct 9 to a noise damper 10, and is then fed into a system for distributing the air to the different occupied zones.

Here air is tapped from a duct 11 deriving from noise damper 10, and at the same time supplied via secondary regulating devices 12A, 12B etc. to the occupied zones. The secondary regulating devices may, for example, be of the "Plugg Mar" type such as those marketed by the company Pluggit GmbH. In such a regulating device the supplied air may additionally be heated or cooled in order to bring air to a temperature which is desirable in the associated occupied zones.

The air in the different occupied zones can be discharged by means of a collector system consisting of a plurality of ducts 15 which feed the spent air to a duct 16, which is connected via a noise damper 17 and a duct 18 to the inlet of the second side of heat exchanger 5. The spent air can then be discharged into the atmosphere via ducts 4 and 2.

A short-circuit duct 20 is fitted between ducts 3 and 4, with which possibly a proportion of the spent air can be mixed with a proportion of supplied air. As far as the spent air is concerned this cannot be impeded by constituents such as water or gas which prevent mixing with the fresh air. If partial recovery of the spent air is possible, this has a positive effect on the operation of the installation.

### The installation operates as follows:

The air supplied via duct 3 deriving from the atmosphere is brought in the heat exchanger 5 to a temperature which is approximately equal to the temperature of the air in the occupied zones. This takes place by heat exchange between the fresh air and the air deriving from those occupied zones.

The supplied air is then brought in regulating device 7 and 8 to a temperature which is approximately equal to the mean temperature required in the different occupied zones. This supplied air is then fed to the different additional regulating devices, one for each occupied zone, in which the air is brought to a temperature which can be set in the occupied zones concerned.

The spent air is collected from the different occupied zones via ducts 15 and discharged via heat exchanger 5 and ducts 4 and 2 to the atmosphere.

By using central regulating device 7 and 8 and local regulating device 12A, 12B etc., it is possible to render the entire installation very efficient from the energy viewpoint, for the local regulating devices need only make slight adjustments and can therefore be provided with sufficiently small dimensions.

On the other hand, regulating devices 7 and 8 may be dimensioned so that they operate to the optimum degree according to the temperature obtained in heat exchanger 5.

Of course the installation may also be provided with the required valves and pumps so that the entire installation is able to operate satisfactory, as will be clear to the person skilled in the art. Furthermore, a digitally controlled unit is provided for regulating the air flow and air temperature. This unit incorporates all possible regulating functions that are associated, via a BWS system, with regulating units 7, 8, 12A and 12B. The regulators can therefore be used both individually in each installation and in a central control system for buildings.

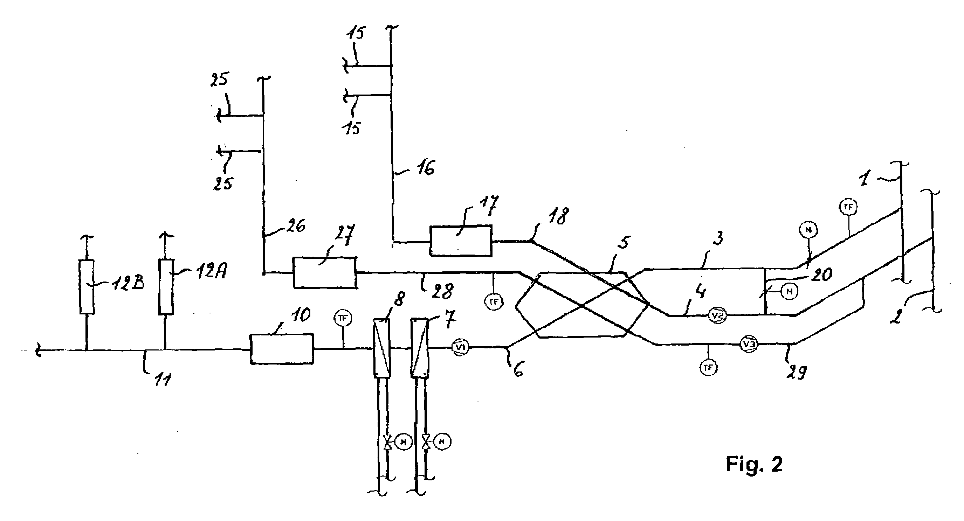

The installation shown in Fig. 2 is largely similar to that shown in Fig. 1 and the same reference numbers are therefore used.

The difference lies in the use of two separate discharge systems for the spent air. On the one hand there is a system of ducts 15 which are connected via noise damper 17 and duct 18 to a first inlet of the second side of the heat exchanger. This system is suitable for discharging spent air which is not impeded by gas, moisture and the like, and a proportion of that air may therefore be mixed with the air supplied via duct 20.

The second system is provided for the discharge of impeded air, e.g. air deriving from toilets, bathrooms or the like.

Here use is made of a system of ducts 25 which is connected, via a collector duct 26, a noise damper 27 and a duct 28, to an inlet of the second side of heat exchanger 25.
The air leaves the heat exchanger via duct 29 and is fed directly into duct 2. It is clear that in heat exchanger 5 the second side, i.e. the discharged air side, consists of two separate systems so that no mixing of the air can take place.

In an advantageous embodiment of the invention at least duct 1 is laid partially underground, the air being sucked in somewhere in the surrounding area of the building, transferred underground and comes into heat exchanging contact with the ground. If the dept at which the air is transferred is correctly selected, the added air is always kept at an almost constant temperature.

This provides the possibility of not using heat exchanger 5.

An installation according to the invention may also be designed so that parts 5, 7 and 8 are only used for a certain number of occupied zones, and can therefore dimensioned so that they can be installed under the floor or in walls of the building.

It is clear that the is not limited to the embodiments described and represented, but that numerous modifications can be made, within the scope of the claims, that form part of the invention.

## Claims

1. An installation for regulating at least the temperature in a plurality of occupied zones in a building by means of conditioned air, comprising a supply system for outside air, a discharge system for returning air to the outside atmosphere, a primary heat exchanger between on the one hand the supplied air and on the other the discharged air, a distribution box connected on the one hand to the heat exchanger for the supplied air and on the other to a plurality of pipes which open into the different occupied zones, and a collector which is on the one hand connected to the primary heat exchanger for the air to be discharged and on the other to a plurality of pipes which open into the different occupied zones, **characterised in that** a regulating device is fitted between the primary heat exchanger and the distribution box for heating and cooling the supplied air respectively.

2. The installation according to Claim 1, **characterised in that** the regulating device regulates the temperature to a mean value of the temperature desired in the different occupied zones.

3. The installation according to Claim 2, **characterised in that** a second regulating device is installed between the distribution box and each occupied zone, with which device the temperature of the supplied air can be set to the value desired for the occupied zone concerned.

4. The installation according to any one of the preceding claims, **characterised in that** a short-circuit is installed between the supply system and the discharge system with which at least a proportion of the discharged air is added to the supplied air.

5. The installation according to any one of the preceding claims, **characterised in that** the supply system is provided with a pipe system which extends partially underground into the area surrounding the occupied zones and is in heat exchanging contact with the surrounding soil.

6. The installation according to any one of the preceding claims, **characterised in that** a distribution system is present which distributes the supplied air to a plurality of primary heat exchangers, wherein each primary heat exchanger, with the associated regulating device, serves a limited number of occupied zones.

7. The installation according to any one of the preceding claims, **characterised in that** each primary heat exchanger, with associated regulating device, is installed in the floor or wall of one of the occupied zones whose temperature is regulated.
